# EUROPÄISCHE PATENTSCHRIFT

(11) **EP 2 604 928 B1**
(45) Veröffentlichungstag und Bekanntmachung des Hinweises auf die Patenterteilung: **12.10.2016**
(21) Anmeldenummer: 12196709.5
(22) Anmeldetag: 12.12.2012
(51) Int. Cl.: B32B 17/10, C03C 17/42, F24B 1/192, C09K 9/00, F23M 5/00, F23M 7/00, F24B 13/00

(54) **Vorrichtung zum Heizen**
Device for heating
Dispositif de chauffage

(30) Priorität: 15.12.2011 DE 102011121106
(43) Veröffentlichungstag der Anmeldung: 19.06.2013
(73) Patentinhaber: Robert Bosch GmbH, 70469 Stuttgart (DE)
(72) Erfinder: Jockel, Joerg, 35423 Lich (CZ); Lindemer, Vera, 71254 Ditzingen (DE); Bachmann, Oliver, 35452 Heuchelheim (DE)

(56) Entgegenhaltungen:
- EP-A1- 2 141 135
- WO-A1-00/60407
- WO-A1-2012/062467
- DE-A1-102008 064 357
- KR-A- 20080 050 354
- US-A1- 2008 145 625

## Beschreibung

Die vorliegende Erfindung bezieht sich auf eine Vorrichtung zum Heizen, insbesondere auf einen wassergeführten Kaminofen, nach dem Oberbegriff von Anspruch 1 und ein Verfahren zum Heizen nach dem Oberbegriff von Anspruch 10.

Wasserführende Kaminöfen werden üblicherweise in Häusern mit geringem Energiebedarf genutzt. In einem definierten Verteilungsverhältnis ihrer Wärmeabgabe von z.B. 70 % an Wasser und 30 % an die umgebende Luft (z.B. Aufstellraum) werden diese Geräte bevorzugt mit Brennstoffen aus nachwachsenden Rohstoffen wie z.B. Holz in unterschiedlichen Formen (Scheitholz, Briketts, Pellets) betrieben. Die bei der Verbrennung entstehende Energie wird entsprechend dieser fixen Anteile durch die am Ofen angebrachten Wassertaschen in das Heizungssystem eingetragen bzw. als Strahlungswärme über die Scheibe der Tür in den Aufstellraum abgegeben. Als Scheibenmaterial werden üblicherweise Borsilikatglas mit einem hohen Siliziumanteil oder Quarzgläser verwendet.

Derartige Vorrichtungen zum Heizen weisen das Problem auf, dass das über u.a. die Größe der Wärmeübertragerflächen respektive Scheibengröße festgelegte Verteilungsverhältnis zwischen Wasser und Luft nicht weiter veränderbar (zum Beispiel steuerbar) ist. Somit muss bereits beim Kauf des Gerätes eine Entscheidung über die Verteilung der Nutzung der entstehenden Wärme getroffen werden. Eine flexible Nutzung unter Berücksichtigung des aktuellen Wärmebedarfes ist bisher nicht möglich.

Es ist somit Aufgabe der vorliegenden Erfindung eine Vorrichtung zum Heizen, insbesondere einen wassergeführten Kaminofen, derart weiterzuentwickeln, dass die Energieabgabe an die Umgebung (an den umgebenden Raum) bei gegebener Wärmestrahlung veränderbar ist.

Die US 2008/0145625 A1 offenbart ein Verfahren zur Herstellung eines Substrats mit einem Layer, wobei eine beispielhafte Verwendung des Substrats ein Glassichtfeld bei einem Kamin betrifft.

Die nachveröffentlichte WO 2012/062467 A1 zeigt ein Erzeugnis mit einem Glas- oder Glaskeramik-Substrat, welches mit einer ein Metalloxid enthaltenden Schicht beaufschlagt ist, wobei eine angegebene Nutzung Vorrichtungen zur Wärmeerzeugung wie Kamine oder Kaminöfen betrifft.

Die DE 102008064357 A1 beschreibt eine optisch aktive Verglasung, bei der eine optische Eigenschaft durch Zuführen elektrischer Leistung veränderbar ist, mit einer elektrischen Leistungsquelle, die mit der optisch aktiven Verglasung elektrisch verbindbar ist.

Die Lösung der zuvor genannten Aufgabe erfolgt durch eine Vorrichtung zum Heizen mit einer Brennkammer zum Aufnehmen von Brennstoff (Brenngut), wobei die Brennkammer zumindest abschnittsweise von einer zumindest teilweise transparenten und/oder teilweise reflektierenden Wandung zur Abgrenzung gegenüber einem umgebenden Raum umschlossen ist, wobei das transparente Wandungsteil zumindest teilweise aus elektrochromem Glas besteht und der Grad der Transparenz und/oder der Grad der Reflexion der Wandung einstellbar. Diese Einstellung umfasst ein Ein- / Ausschalten, ein mehrstufiges sowie ein stufenloses Variieren.

Dies ist vorteilhaft, da elektrochromes Glas zum einen sehr hitzebeständig ausgestaltet werden kann und zum anderen einfach, dauerhaft und schnell die Eigenschaften des elektrochromen Glases hinsichtlich Lichtdurchlässigkeit (oder allgemein: Energiedurchlässigkeit) durch Spannungsbeaufschlagung veränderbar sind. Insbesondere ist durch eine Veränderung des Grades der Reflexion und/oder der Transparenz der Wandung die Wärmeübertragung, z.B. bei konstant strahlender Wärmequelle, aus der Vorrichtung heraus in den zu erwärmenden Raum hinein einstellbar.

Es ist eine Spannungsquelle zum Beaufschlagen des elektrochromen Glases mit einer Spannung vorgesehen. Dabei kann die Wandung aus einer einfachen beschichteten Glasscheibe oder auch aus einem Verbund zweier oder mehrerer Glasscheiben und/oder Beschichtungen bestehen. Die Spannung ist mittels einer Regelungseinrichtung manuell und/oder automatisch einstellbar. Dies ist vorteilhaft, da im Falle einer manuellen Einstellung die Nutzer je nach Situation die Wärmeübertragung verändern können. Im Falle der automatischen Einstellung ist die Regelungseinrichtung bevorzugt eine Recheneinheit, die zeitbasiert, temperaturbasiert und/oder programmbasiert eine Veränderung, d.h. Erhöhung oder Verminderung der Transparenz und/oder Reflexion, durchführt.

Erfindungsgemäß sind Sensorsignale von der Regelungseinrichtung auswertbar und/oder es sind von der Regelungseinrichtung programmierte Ansteuerungsverläufe ausführbar.

Dies ist vorteilhaft, da eine teilweise oder vollständig autonome Steuerung der Temperierung des die Vorrichtung umgebenden Raums möglich ist.

Dabei sind die Sensorsignale von mindestens einer Sensoreinrichtung, ausgewählt aus der Gruppe bevorzugt zumindest bestehend aus einem Lichtsensor zum Erfassen der Lichtverhältnisse in dem die Vorrichtung umgebenden Raum, einem Temperatursensor zum Erfassen der Temperatur in dem die Vorrichtung umgebenden Raum und/oder in der Vorrichtung, einem Mengensensor (zum Beispiel Gewichtssensor, Füllstandssensor) zum direkten oder indirekten Erfassen des noch im Brennraum vorhandenen Brennstoffs oder Kombinationen daraus, erfassbar. Dies ist vorteilhaft, da die Temperierung des die Vorrichtung umgebenden Raums somit von einem und bevorzugt von einer Mehrzahl an Einflussfaktoren abhängig machbar ist. Wird beispielsweise erkannt, dass die Dämmerung einsetzt und sich somit die durch das Sonnenlicht eingestrahlte Wärme reduziert, kann zeitgleich die verbleibende Restenergiemenge des Brennstoffs durch eine Erhöhung der Transparenz und/oder eine Verminderung der Reflektivität zum Ausgleich in den zu erwärmenden Raum geleitet werden.

Gemäß einer bevorzugten Ausführungsform der vorliegenden Erfindung ist das elektrochrome Glas mit einem Material beschichtet, das auswählbar ist aus einer Materialgruppe umfassend Übergangsmetalle, Übergangsmetalloxide, leitfähige Polymere, Verbindungen aus mindestens einem Übergangsmetall und/oder einem Übergangsmetalloxid mit mindestens einem leitfähigen Polymer und/oder Kombinationen daraus. Übergangsmetalle, auch Übergangselemente genannt, sind chemische Elemente mit den Ordnungszahlen 21 bis 30, 39 bis 48, 57 bis 80 und 89 bis 112, und umfassen unter anderem Wolfram und Molybdän. Elektrisch leitfähige Polymere sind wie beispielsweise Polyanilin entweder intrinsisch (von sich aus) leitfähig oder sie erhalten ihre elektrische Leitfähigkeit durch Zugabe von Salzen.

Diese Ausführungsform ist vorteilhaft, da die Herstellung von elektrochromen Glas durch die Verwendung dieser Materialien günstig durchführbar ist. Ferner ist die Ansprechzeit, die Beständigkeit und die Funktionssicherheit bei der Verwendung dieser Materialien am besten.

Eine mögliche zweite funktionale Scheibe im zu erstellenden Verbund kann Verbindungen aus der Gruppe der Alkalimetalle (Lithium u.a.) und/oder Erdalkalimetalle (Beryllium u.a.) beinhalten, die z.B. in ionischer Form vorliegen können.

Gemäß der vorliegenden Erfindung ist die Regelungseinrichtung mittels eines daran angeordneten Eingabemittels oder über eine drahtlose Verbindung ansteuerbar.

Diese Ausführungsform ist vorteilhaft, da das Eingabemittel dabei z.B. als Drehschalter, Kippschalter etc. ausgebildet sein kann, wodurch eine Ansteuerung ergonomisch optimal angepasst erfolgen kann. Im Falle einer drahtlosen Verbindung erfolgt bevorzugt über ein Bluetooth-, Wi-Fi- oder Telefonverbindung die Kommunikation zwischen der Regelungseinrichtung und dem Eingabemittel, das z.B. als Mobilteil, insbesondere Mobiltelefon, bzw. eine auf dem Mobilteil/Mobiltelefon ablauffähiges Programm, ausgebildet sein kann.

Gemäß einer weiteren bevorzugten Ausführungsform der vorliegenden Erfindung ist die Vorrichtung zum Heizen ein wasserführender Kaminofen.

Diese Ausführungsform ist vorteilhaft, da dies eine Massenanwendung in privaten und gewerblichen Räumlichkeiten ermöglicht, wodurch ein deutlicher Beitrag zur intelligenten Energienutzung gegeben ist. Ferner ist die Energieerzeugung aus nachwachsenden Rohstoffen, wie Holz, möglich, wodurch die Abhängigkeit von Öl und Gas reduziert wird. Es ist jedoch ebenfalls denkbar, dass in dem Ofen Öl und/oder Gas als Brennstoff verwendet wird.

Weiterhin wird die oben genannte Aufgabe durch ein Verfahren zum Heizen mittels einer erfindungsgemäßen Vorrichtung zum Heizen gelöst, das mindestens den Schritt des Verbrennens von Brenngut in einer Brennkammer, wobei die Brennkammer zumindest abschnittsweise von einer zumindest teilweise transparenten Wandung zur Abgrenzung gegenüber einem umgebenden Raum umschlossen ist und wobei die durch die Verbrennung entstehende Wärmestrahlung zumindest teilweise durch die zumindest zeitweise teilweise transparente Wandung hindurchdringt, umfasst. Erfindungsgemäß ist in einem zweiten Schritt eine beliebige Veränderung des Anteils der die Wandung durchdringenden Wärme mittels einer Veränderung des Grades der Transparenz und/oder des Grades der Reflexion der Wandung erreichbar.

Weitere Vorteile, Ziele und Eigenschaften vorliegender Erfindung werden anhand nachfolgender Beschreibung anliegender Zeichnungen erläutert, in welchen beispielhaft Vorrichtungen zum Heizen dargestellt sind. Bauteile der Vorrichtungen zum Heizen, welche in den Figuren wenigsten im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1: eine erfindungsgemäße Vorrichtung zum Heizen;
- Fig. 2: einen Aufbau einer zumindest zeitweise teilweise transparenten und/oder reflektierenden Wandung;
- Fig. 3a: die in Fig. 2 gezeigte Wandung in einem ersten Zustand;
- Fig. 3b: die in Fig. 2 gezeigte Wandung in einem zweiten Zustand;
- Fig. 4: eine perspektivische Darstellung einer zumindest zeitweise teilweise transparenten und/oder reflektierenden Wandungseinrichtung; und
- Fig. 5: eine Darstellung des Anteils des transmittierten Lichts in Abhängigkeit von der Wellenlänge des Lichts.

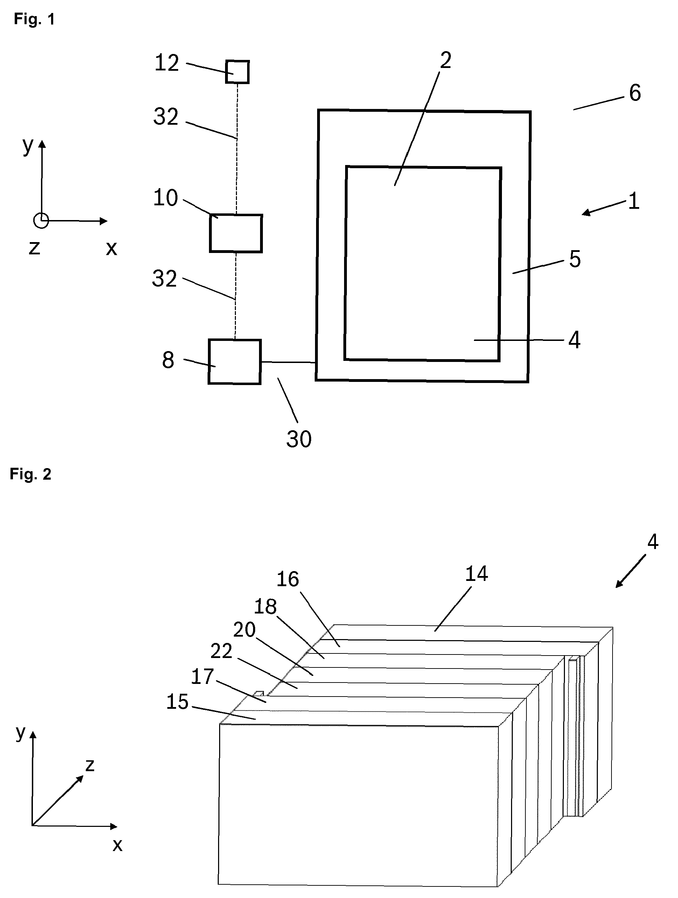

In Fig. 1 ist eine Vorrichtung 1 zum Heizen gezeigt. Diese Vorrichtung 1 ist bevorzugt als wasserführender Kaminofen 1 ausgebildet. Die Vorrichtung 1 zum Heizen weist bevorzugt eine Brennstelle 2 bzw. eine Brennkammer 2 auf, die zumindest durch eine zumindest zeitweise zumindest teilweise transparente Wandung 4 gegenüber zumindest einem Bereich des umgebenden Raums (gegenüber der Umgebung) 6 abgegrenzt ist. Es ist ebenfalls denkbar, dass die Wandung 4 mit intransparenten Wandungsteilen 5 gekoppelt bzw. darin aufgenommen ist. Derartige intransparente Wandungsteile bestehen bevorzugt aus Metall, Stein oder keramischen Materialien. Die transparente Wandung 4 steht zumindest zeitweise mit einer Spannungsquelle 8 in Verbindung. Die Spannungsquelle 8 kann dabei direkt mit der Vorrichtung 1 zum Heizen oder der Wandung 4 (z.B. in Form eines Akkumulators oder in Form einer Stromnetzverbindung) verbunden sei, wobei ebenfalls vorstellbar ist, dass diese räumlich voneinander beabstandet angeordnet sind. Eine Spannungsversorgung kann dabei mittels Kabel oder kabellos erfolgen. Weiterhin weist die Vorrichtung 1 zum Heizen eine Steuereinrichtung 10 bzw. eine Regelungseinrichtung 10 auf. Diese Regelungseinrichtung 10 kann dabei getrennt von der Spannungsversorgung 8 oder gemeinsam als eine Einrichtung ausgebildet sein. Die Regelungseinrichtung 10 ist bevorzugt derart ausgebildet, dass sie in Abhängigkeit von einstellbaren oder vorgegebenen Zeitpunkten, von durch eine oder mehrere Sensoreinrichtungen 12 erfasste Sensorsignale und/oder gespeicherte bzw. manuell/digital vorgebbare Abläufe die Transparenz und/oder Reflektivität der Wandung, insbesondere durch die Beaufschlagung mit Spannung, ändert. Das Bezugszeichen 30 kennzeichnet eine stromführende oder spannungsführende Leitung und das Bezugszeichen 32 kennzeichnet signalführende Verbindungen. Es ist jedoch ebenfalls vorstellbar, dass über eine Leitung 30 Strom und Steuersignale geleitet werden.

In Fig. 2 ist ein Schichtaufbau einer zumindest zeitweise zumindest teilweise transparenten Wandung 4 dargestellt. Dieser Schichtaufbau umfasst entgegen der z-Richtung, d.h. von der Brennkammer 2 abweisend, nacheinander eine Glasschicht 14, eine TCO-Schicht 16, eine erste elektrochrome Schicht 18, eine Polymerelektrolytfolie 20, eine zweite elektrochrome Schicht 22, eine weitere TCO-Schicht 17 sowie eine weitere Glasschicht 15. Die Schichten 14, 15, 16, 17, 18, 20, 22 können dabei voneinander verschiedene Dicken aufweisen, wobei auch denkbar ist, dass einzelne oder alle Schichten dieselbe Dicke aufweisen. Eine TCO-Schicht (transparent conductive oxide, transparentes elektrisch leitfähiges Oxid) ist eine Schicht aus speziellen elektrisch leitfähigen Materialien mit einer vergleichsweise geringen Absorption von elektromagnetischen Wellen im Bereich des sichtbaren Lichts. Bevorzugt werden die TCO-Schichten zum Verändern der Transparenz und/oder der Reflektivität mit Spannung beaufschlagt. Es ist denkbar, dass die Wandung 4 mit nur einer elektrochromen Schicht oder mit einer Mehrzahl elektrochromer Schichten, insbesondere 3, 4, 5, 6 oder mehr Schichten, ausgebildet wird. Diese Anordnung bzw. die Verwendung elektrochromer Gläser ermöglicht eine Fülle von Vorteilen, wie z.B. dass eine stufenlose Änderung der Transmission von Licht und Wärme vornehmbar ist, dass ein Schalthub im visuellen Bereich (VIS-Bereich) zwischen bevorzugt 8 % und 75 % realisierbar ist, dass ein Kontrastverhältnis bevorzugt größer 9 zu 1 realisierbar ist, dass der nahe Infrarotbereich (NIR-Bereich) bevorzugt mitschaltet, dass eine stufenlose Änderungen der Energietransmission zwischen bevorzugt 6 % und 52 % einstellbar ist und dass sich die Reflektivität nicht ändert. Ferner bewirkt die mehrschichtige Anordnung bzw. die Verwendung elektrochromer Gläser, dass die Wandung 4 bzw. die Scheibenanordnung 4 Verbundsicherheitsglaseigenschaften aufweist.

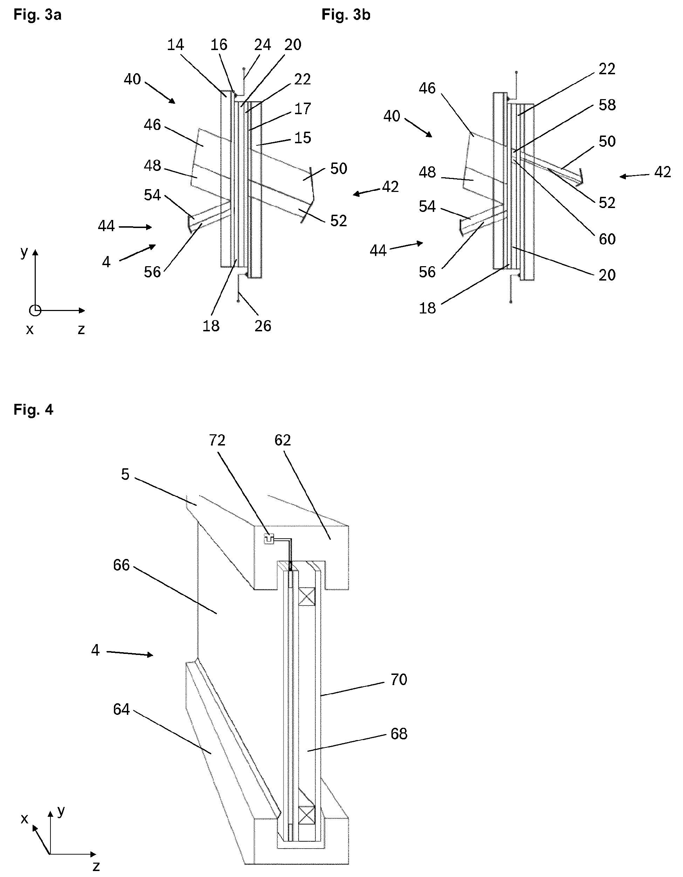

In Fig. 3a ist ein erster Betriebszustand der Vorrichtung 1 zum Heizen dargestellt. Gemäß dieser Darstellung ist die Wandung 4 nicht mit einer Spannung beaufschlagt bzw. das Glas wurde kurzgeschlossen oder die Polarität der Spannung derart geändert, dass die Wandung 4 farblos ist. In diesem Zustand kann die aus der Brennkammer 2 kommende externe Einstrahlung 40, die Licht aus dem sichtbaren Spektrum 46 und nahes Infrarotlicht 48 umfasst, zu einem Großteil 50, 52 durch die Wandung 4 hindurch transmittiert werden. Lediglich ein geringer Anteil 54, 56 bildet den reflektierten Anteil 44. Von der Wandung 4 wird nahezu kein Licht bzw. im Wesentlichen kein Licht absorbiert.

In Fig. 3b sind die elektrochromen Schichten 18, 22 eingefärbt, wodurch ein großer Teil der Lichtanteile 50, 52 absorbiert wird. Der reflektierte Anteil 44 bleibt dabei im Wesentlichen konstant. Es ist ersichtlich, dass die Absorption des Lichts unabhängig von dem jeweiligen Spektrum schrittweise erfolgt, d.h. jede Schicht 18, 22 absorbiert einen gewissen Anteil der auf ihr auftreffenden Strahlung. So reduziert die Schicht 18 die Strahlungsanteile 46, 48 (abzüglich der reflektierten Anteile 54, 56) auf die Strahlungsanteile 58, 60 und die Schicht 22 die Strahlungsanteile 58, 60 auf die Strahlungsanteile 50, 52. Die Schaltung erfolgt somit bevorzugt zwischen farblos transparent (Fig. 3a) und beispielsweise blau transparent (Fig. 3b) und bevorzugt unter dem Anlegen einer Gleichspannung im Niederspannungsbereich, insbesondere in einem Bereich zwischen 1 und 10 Volt und bevorzugt zwischen 2 und 5 Volt und bevorzugt bei genau 3 Volt. Weiterhin sind graduelle Änderungen des Färbungsgrades einstellbar und die Spannung muss besonders bevorzugt nur während des Schaltvorgangs anliegen. Die absorbierte und die reflektierte Wärme wird bevorzugt zum Heizen des in der Vorrichtung 1 geführten Mediums, insbesondere Wasser, verwendet, d.h. dass das Wasser zur absorbierten Wärme hingeführt wird oder die Wärme zum Wasser geführt wird.

In Figur 4 ist ein Beispiel einer Wandungsanordnung 4 der erfindungsgemäßen Vorrichtung 1 dargestellt. Die zumindest zeitweise transparenten Wandungsteile 66, 70 werden dabei von intransparenten Wandungsteilen 5, die Lagerungseinrichtungen 62, 64 ausbilden, gehalten. Das Bezugszeichen 66 kennzeichnet eine elektrochrome Außenscheibe eines Scheibensandwiches (z.B. im Sinne von Fig. 2), das über eine Leitungsverbindung, insbesondere ein Kabel, und einen Stecker 72 mit der Spannungsquelle 8 verbindbar ist. Durch das Bezugszeichen 70 ist eine Innenscheibe, die bevorzugt mit einer Wärmedämmschicht versehen ist, gekennzeichnet.

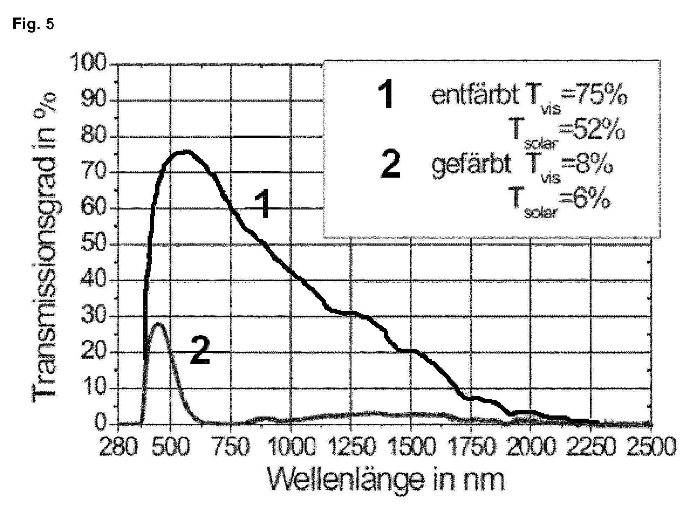

In Fig. 5 sind zwei Verläufe des Transmissionsgrades elektrochromen Glases in Abhängigkeit der Wellenlänge des Lichts repräsentativ für definierte Schaltzustände exemplarisch abgebildet.

An dieser Stelle sei noch darauf hingewiesen, dass sich die Anmelderin vorbehält sämtliche in den Anmeldungsunterlagen offenbarten Merkmale zu beanspruchen soweit sie einzeln oder in Kombination miteinander gattungsgemäße oder aus dem Stand der Technik bekannte Vorrichtungen zum Heizen vorteilhaft weiterentwickeln.

### BEZUGSZEICHENLISTE

- 1: Vorrichtung zum Heizen
- 2: Brennkammer
- 4: Teilweise transparente Wandung
- 5: Wandung
- 6: umgebender Raum, Umgebung
- 8: Spannungsquelle
- 10: Regelungseinrichtung / Steuereinrichtung
- 12: Sensoreinrichtung
- 14: Glasschicht
- 15: Weitere Glasschicht
- 16: TCO-Schicht
- 17: Weitere TCO-Schicht
- 18: Erste elektrochrome Schicht
- 20: Polymerelektrolytfolie
- 22: Zweite elektrochrome Schicht
- 24: Erster Kontakt
- 26: Zweiter Kontakt
- 30: Stromführende Verbindung
- 32: Signalführende Verbindung
- 40: Externe Einstrahlung
- 42: Transmittiertes Licht
- 44: Reflektierter Anteil
- 46: Visueller Bereich
- 48: Nahes Infrarot
- 50: Transmittiertes visuelles Licht
- 52: Transmittiertes nahes Infrarotlicht
- 54: Reflektiertes visuelles Licht
- 56: Reflektiertes nahes Infrarotlicht
- 58: Einfach gefiltertes visuelles Licht
- 60: Einfach gefiltertes nahes Infrarotlicht
- 62: Erste Lagerungseinrichtung
- 64: Zweite Lagerungseinrichtung
- 66: Elektrochrome Außenscheibe
- 68: Scheibenzwischenraum
- 70: Innenscheibe mit Wärmedämmbeschichtung
- 72: Kabel mit Stecker zur Steuereinheit / Regelungseinrichtung

- x: Erste Richtung
- y: Zweite Richtung
- z: Dritte Richtung

## Patentansprüche

1. Vorrichtung zum Heizen (1) mit einer Brennkammer (2) zum Aufnehmen von Brennstoff, wobei die Brennkammer (2) zumindest abschnittsweise von einer zumindest teilweise transparenten und/oder zumindest teilweise reflektierenden Wandung (4) zur Abgrenzung gegenüber einem umgebenden Raum (6) umschlossen ist,
wobei der transparente Wandungsteil (4) zumindest teilweise aus elektrochromem Glas besteht und der Grad der Transparenz und/oder der Grad der Reflexion der Wandung (4) einstellbar ist, wobei eine Spannungsquelle (8) zum Beaufschlagen des elektrochromen Glases mit einer Spannung vorgesehen und die Spannung mittels einer Regelungseinrichtung (10) manuell oder automatisch einstellbar ist
**dadurch gekennzeichnet, dass** die Regelungseinrichtung (10) mittels eines daran angeordneten Eingabemittels oder über eine drahtlose Verbindung ansteuerbar ist, und dass Sensorsignale von der Regelungseinrichtung (10) auswertbar und/oder von der Regelungseinrichtung (10) programmierte Ansteuerungsverläufe ausführbar sind, wobei die Sensorsignale von mindestens einer Sensoreinrichtung (12), ausgewählt aus der Gruppe zumindest bestehend aus einem Lichtsensor zum Erfassen der Lichtverhältnisse in dem die Vorrichtung umgebenden Raum (6), einem Temperatursensor zum Erfassen der Temperatur in dem die Vorrichtung umgebenden Raum (6) und/oder in der Vorrichtung (1), einem Mengensensor zum Erfassen des noch im Brennraum (2) vorhandenen Brennstoffs oder Kombinationen daraus, erfassbar sind.

2. Vorrichtung nach Anspruch 2,
**dadurch gekennzeichnet, dass** das elektrochrome Glas mit einem Material, ausgewählt aus einer Materialgruppe umfassend Übergangsmetalle, Übergangsmetalloxide, leitfähige Polymere, Verbindungen aus mindestens einem Übergangsmetall und/oder einem Übergangsmetalloxid mit mindestens einem leitfähigen Polymer und/oder Kombinationen daraus, beschichtet ist.

3. Vorrichtung nach einem der vorangegangenen Ansprüche,
**dadurch gekennzeichnet, dass** die Vorrichtung zum Heizen (1) ein wasserführender Kaminofen ist.

4. Verfahren zum Heizen (1), mindestens umfassend die Schritte:
• Verbrennen von Brenngut in einer Brennkammer (2),
• wobei die Brennkammer (2) zumindest abschnittsweise von einer zumindest teilweise transparenten Wandung (4) und/oder von einer zumindest teilweise reflektierenden Wandung (4) zur Abgrenzung gegenüber einem umgebenden Raum (6) umschlossen ist,
• wobei die durch die Verbrennung entstehende Wärmestrahlung zumindest teilweise durch die zumindest zeitweise teilweise transparente und/oder teilweise reflektierende Wandung (4) hindurchdringt und eine Veränderung des Anteils der die Wandung (4) durchdringenden Wärme mittels einer Veränderung des Grades der Transparenz und/oder des Grades der Reflexion der Wandung (4) bewirkt wird, indem eine ein elektrochromes Glas beaufschlagende Spannung mittels einer Regelungseinrichtung (10) manuell oder automatisch eingestellt wird,
**dadurch gekennzeichnet, dass** die Regelungseinrichtung (10) mittels eines daran angeordneten Eingabemittels oder über eine drahtlose Verbindung angesteuert ist, und die Regelungseinrichtung (10) Sensorsignale auswertet und/oder programmierte Ansteuerungsverläufe ausführt, wobei die Sensorsignale von mindestens einer Sensoreinrichtung (12), ausgewählt aus der Gruppe zumindest bestehend aus einem Lichtsensor zum Erfassen der Lichtverhältnisse in dem die Vorrichtung umgebenden Raum (6), einem Temperatursensor zum Erfassen der Temperatur in dem die Vorrichtung umgebenden Raum (6) und/oder in der Vorrichtung (1), einem Mengensensor zum Erfassen des noch im Brennraum (2) vorhandenen Brennstoffs oder Kombinationen daraus, erfasst werden.

## Claims

1. Heating device (1) having a combustion chamber (2) for holding fuel, wherein the combustion chamber (2) is enclosed at least partially by an at least partially transparent and/or at least partially reflective wall (4) for the purpose of delimitation with respect to a surrounding space (6),
wherein the transparent wall part (4) is composed at least partially of electrochromic glass and the degree of transparency and/or the degree of reflection of the wall (4) can be adjusted, wherein a voltage source (8) is provided for applying a voltage to the electrochromic glass, and the voltage can be adjusted manually or automatically by means of a control device (10), **characterized in that** the control device (10) can be actuated by means of an input means, arranged thereon, or via a wireless connection, and **in that** sensor signals can be evaluated by the control device (10), and/or programmed actuation profiles can be implemented by the control device (10), wherein the sensor signals can be detected by at least one sensor device (12), selected from the group at least comprising a light sensor for detecting the light conditions in the space (6) surrounding the device, a temperature sensor for detecting the temperature in the space (6) surrounding the device and/or in the device (1), a quantity sensor for detecting the fuel still present in the combustion chamber (2) or combinations thereof.

2. Device according to Claim 2,
**characterized in that** the electrochromic glass is coated with a material, selected from a material group comprising transition metals, transition metal oxides, conductive polymers, compounds composed of at least one transition metal and/or one transition metal oxide with at least one conductive polymer and/or combinations thereof.

3. Device according to one of the preceding claims,
**characterized in that** the heating device (1) is a water-conducting stove.

4. Heating method (1), at least comprising the steps:
• burning combustible material in a combustion chamber (2),
• wherein the combustion chamber (2) is enclosed at least partially by an at least partially transparent wall (4) and/or by an at least partially reflective wall (4) for the purpose of delimitation with respect to a surrounding space (6), and
• wherein the thermal radiation produced by the combustion penetrates at least partially through the at least temporarily partially transparent and/or partially reflective wall (4) and a change is brought about in the proportion of the heat penetrating the wall (4) by means of a change in the degree of transparency and/or in the degree of reflection of the wall (4) by manually or automatically adjusting, by means of a control device (10), a voltage which is applied to an electrochromic glass,
**characterized in that** the control device (10) is actuated by means of an input means, arranged thereon, or via a wireless connection, and the control device (10) evaluates sensor signals and/or implements programmed actuation profiles, wherein the sensor signals are detected by at least one sensor device (12), selected from the group at least comprising a light sensor for detecting the light conditions in the space (6) surrounding the device, a temperature sensor for detecting the temperature in the space (6) surrounding the device and/or in the device (1), a quantity sensor for detecting the fuel still present in the combustion chamber (2), or combinations thereof.

## Revendications

1. Dispositif de chauffage (1) comprenant une chambre de combustion (2) destinée à recevoir du combustible, la chambre de combustion (2) étant entourée au moins en partie par une paroi (4) au moins en partie transparente et/au moins en partie réfléchissante pour la délimiter par rapport à un espace environnant (6),
la partie de paroi transparente (4) se composant au moins en partie d'un verre électrochromique et le degré de transparence et/ou le degré de réflexion de la paroi (4) pouvant être ajustés, une source de tension (8) étant prévue pour solliciter le verre électrochromique avec une tension et la tension pouvant être ajustée manuellement ou automatiquement au moyen d'un dispositif de réglage (10),
**caractérisé en ce que** le dispositif de réglage (10) peut être commandé au moyen d'un moyen de saisie disposé sur celui-ci ou d'une connexion sans fil et **en ce que** des signaux de capteur peuvent être analysés par le dispositif de réglage (10) et/ou des opérations de commande programmées peuvent être effectuées par le dispositif de réglage (10), les signaux de capteur pouvant être détectés par au moins un dispositif de capteur (12), choisi parmi le groupe constitué d'au moins un capteur de lumière pour la détection des conditions de luminosité dans l'espace (6) entourant le dispositif, un capteur de température pour détecter la température dans l'espace (6) entourant le dispositif et/ou, dans le dispositif (1), un capteur quantitatif pour détecter le combustible encore présent dans la chambre de combustion (2) ou des combinaisons de ceux-ci.

2. Dispositif selon la revendication 2,
**caractérisé en ce que** le verre électrochromique est revêtu d'un matériau choisi parmi un groupe de matériaux comprenant des métaux de transition, des oxydes de métaux de transition, des polymères conducteurs, des composés constitués d'au moins un métal de transition et/ou d'un oxyde de métal de transition avec au moins un polymère conducteur et/ou des combinaisons de ceux-ci.

3. Dispositif selon l'une quelconque des revendications précédentes,
**caractérisé en ce que** le dispositif de chauffage (1) est un poêle-cheminée à circuit d'eau.

4. Procédé de chauffage (1) comprenant au moins les étapes suivantes :
- combustion de combustible dans une chambre de combustion (2),
- la chambre de combustion (2) est entourée au moins en partie par une paroi (4) au moins en partie transparente et/ou par une paroi (4) au moins en partie réfléchissante pour la délimiter par rapport à un espace environnant (6),
- le rayonnement thermique généré par la combustion traversant au moins en partie la paroi (4) au moins temporairement en partie transparente et/ou en partie réfléchissante et une variation de la proportion de la chaleur traversant la paroi (4) étant réalisée au moyen d'une variation du degré de transparence et/ou du degré de réflexion de la paroi (4) par le fait qu'une tension sollicitant un verre électrochromique est ajustée manuellement ou automatiquement au moyen d'un dispositif de réglage (10),
**caractérisé en ce que** le dispositif de réglage (10) est commandé au moyen d'un moyen de saisie disposé sur celui-ci ou d'une connexion sans fil et le dispositif de réglage (10) analyse des signaux de capteur et/ou effectue des opérations de commande programmées, les signaux de capteur étant détectés par au moins un dispositif de capteur (12) choisi parmi le groupe constitué d'au moins un capteur de lumière pour la détection des conditions de luminosité dans l'espace (6) entourant le dispositif, un capteur de température pour détecter la température dans l'espace (6) entourant le dispositif et/ou dans le dispositif (1), un capteur quantitatif pour détecter le combustible encore présent dans la chambre de combustion (2) ou des combinaisons de ceux-ci.
